# EUROPEAN PATENT SPECIFICATION

(11) **EP 0 436 921 B1**
(45) Date of publication and mention of the grant of the patent: **12.03.1997**
(21) Application number: 90125341.9
(22) Date of filing: 22.12.1990
(51) Int. Cl.: C08K 5/00, C08K 5/08, C08K 5/3445

(54) **Inhibitor concentrate, storage stable unsaturated thermosettable resins and cured products**
Inhibitor-Konzentrat, lagerstabile ungesättigte Harze und gehärtete Produkte
Concentré d'inhibiteur, résines insaturées stables au stockage et produits durcis

(30) Priority: 12.01.1990 US 464506; 12.01.1990 US 464491
(43) Date of publication of application: 17.07.1991
(73) Proprietor: THE DOW CHEMICAL COMPANY, Midland, Michigan 48640 (US)
(72) Inventor: Wykowski, Paul L., Lake Jackson, Texas 77566 (US)
(74) Representative: Sternagel, Hans-Günther, Dr.

(56) References cited:
- EP-A- 0 106 293
- GB-A- 1 137 903
- JP-B-45 001 748
- Derwent Accession no. 86-262 057, Questel Telesystems (WPIL) DERWENT PUBLICATIONS LTD., London

## Description

The present invention concerns a polymerization inhibitor concentrate composition, a curable resin composition containing the said polymerization inhibitor concentrate composition, and a method of manufacturing an article which method comprises curing such a curable resin composition.

Many types of inhibitors are employed to enhance the shelf-stability of liquid thermosettable resins such as unsaturated polyester resins and vinyl ester resins. Examples of these inhibitors include hydroquinone and its alkylated derivatives, phenolic compounds with electron-withdrawing substituents such as nitro, nitroso, or halo moieties, and quinonoid compounds such as para-benzoquinone or para-chloranil.

These compounds enhance the shelf stability of the resin by preventing premature polymerization resulting in the resin becoming an unusable gelatinous mass during storage. However, the addition of such inhibitors to the resin formulation also reduces the ability of the resin to effectively cure during processing. Normally, the shelf stability of the resin must be balanced against the reactivity required for the intended application.

Some of this loss in reactivity may be overcome by the addition of accelerators such as N,N-dimethylaniline, N,N-dimethyl-para-toluidine, or N,N-dimethylacetoacetamide. These compounds accelerate the rate of initiator decomposition and thereby enhance the rate of curing. However, many of these accelerators are unstable if used as an additive in a pre-formulated resin, and may "poison" the cure of the resin by decomposing the initiator too quickly and providing too many radicals of low molecular weight which then forms an incompletely cured resin.

Synergists are compounds which interact together such that the combination of two or more additives mutually enhance the desired performance of each other. Such an example is the addition of phosphite esters in the presence of alkylphenols as antioxidants for polymers and drying oils. Another is the combination of oxalic acid dihydrate and phenothiazine to enhance the storage stability of vinyl ester resins.

Many types of quinonoid compounds have been known to form electron donor-acceptor complexes with compounds such as amines, alkylated polynuclear aromatic compounds, and many other types of polynuclear aromatic compounds e.g. GB-A-1137903. Quinonoid compounds have long been known to be most effective polymerization inhibitors; however, their use as shelf-stability enhancers have been severely limited by their drastic reduction of the desired polymerization rate and would require an impractical amount of initiator and accelerator to effectively complete the curing process.

The addition of imidazole derivatives, which only act as weak accelerators in this process, serve to enhance both the shelf-stability and reactivity in the presence of many quinonoid compounds to a greater degree than would be found with inhibitors which do not form electron-donor acceptor complexes.

Also, the presence of suitable electron-withdrawing groups in the 2 or 3 position on a 1,4-naphthoquinone reduces the adverse effect on reactivity while maintaining suitable storage stability.

It would therefore be desirable to have available storage stable thermosettable ethylenically unsaturated resins which also have suitable reactivity rates with curing agents therefor.

One aspect of the present invention pertains to a polymerization inhibitor concentrate composition containing:
(A) at least one polymerizable ethylenically unsaturated monomer; and
(B) a member selected from the group consisting of
   (1) at least one 1,4-naphthoquinone substituted on the 2 or 3 or both the 2 and 3 positions selected from 2,3-dichloro-1,4-naphthoquinone, 2,3-dibromo-1,4-naphthoquinone, 2,3-dicyano-1,4-naphthoquinone, 2-chloro-1,4-naphthoquinone, 2-bromo-1,4-naphthoquinone, 2-nitro-1,4-naphthoquinone, 2,3,6,7,8,9-hexachloro-1,4-naphthoquinone, 3-bromo-2-chloro-1,4-naphthoquinone or any combination of any two or more such compounds;
   (2) a complex formed from
      (a) at least one quinoid compound and
      (b) at least one imidazole compound; and
   (3) any combination of (1) and (2);
wherein
(i) component (A) is present in an amount of from 50 to 99.9 percent by weight, based upon the combined weight of components (A) and (B); component (B) is present in an amount of from 0.1 to 50 percent by weight, based upon the combined weight of components (A) and (B); and
(ii) components (B2a) and (B2b) are employed in a molar ratio of imidazole compound (B2b) to quinoid compound (B2a) of from 0.5:1 to 100:1.

Another aspect of the present invention pertains to a polymerization inhibitor concentrate composition containing:
(A) at least one thermosettable ethylenically unsaturated polymer; and
(B) a member selected from the group consisting of
   (1) at least one 1,4-naphthoquinone substituted on the 2 or 3 or both the 2 and 3 positions selected from 2,3-dichloro-1,4-naphthoquinone, 2,3-dibromo-1,4-naphthoquinone, 2,3-dicyano-1,4-naphthoquinone, 2-chloro-1,4-naphthoquinone, 2-bromo-1,4-naphthoquinone, 2-nitro-1,4-naphthoquinone, 2,3,6,7,8,9-hexachloro-1,4-naphthoquinone, 3-bromo-2-chloro-1,4-naphthoquinone or any combination of any two or more such compounds;
   (2) a complex formed from
      (a) at least one quinoid compound and
      (b) at least one imidazole compound; and
   (3) any combination of (1) and (2);
   wherein
   (i) component (A) is present in an amount of from 50 to 99.9 percent by weight, based upon the combined weight of components (A) and (B);
      component (B) is present in an amount of from 0.1 to 50 percent by weight, based upon the combined weight of components (A) and (B); and
   (ii) components (B2a) and (B2b) are employed in a molar ratio of imidazole compound (B2b) to quinoid compound (B2a) of from 0.5:1 to 100:1.

Still another aspect of the present invention pertains to a curable composition containing
(I) a resin composition comprising
   (A) at least one thermosettable ethylenically unsaturated resin; and
   (B) a member selected from the group consisting of
      (1) at least one 1,4-naphthoquinone substituted on the 2 or 3 or both the 2 and 3 positions selected from 2,3-dichloro-1,4-naphthoquinone, 2,3-dibromo-1,4-naphthoquinone, 2,3-dicyano-1,4-naphthoquinone, 2-chloro-1,4-naphthoquinone, 2-bromo-1,4-naphthoquinone, 2-nitro-1,4-naphthoquinone, 2,3,6,7,8,9-hexachloro-1,4-naphthoquinone, 3-bromo-2-chloro-1,4-naphthoquinone or any combination of any two or more of such compounds;
      (2) a complex formed from
         (a) at least one quinoid compound and
         (b) at least one imidazole compound; and
      (3) any combination of (1) and (2);
      wherein
      (i) component (A) is present in an amount of from 50 to 99.9 percent by weight, based upon the combined weight of components (A) and (B); component (B) is present in an amount of from 0.1 to 50 percent by weight, based upon the combined weight of components (A) and (B); and
      (ii) components (B2a) and (B2b) are employed in a molar ratio of imidazole compound (B2b) to quinoid compound (B2a) of from 0.5:1 to 100:1; and
(II) a curing amount of at least one curing agent for component (I).

A further aspect of the present invention pertains to a method of manufacturing an article which method comprises curing such a curable composition.

The present invention provides storage stable thermosettable ethylenically unsaturated resins which also have suitable reactivity rates in conjunction with curing agents.

The polymerization inhibitor concentrate compositions of the present invention which comprise (A) at least one polymerizable ethylenically unsaturated monomer; and (B) a member selected from the group consisting of (1) at least one 1,4-naphthoquinone substituted on the 2 or 3 or both the 2 and 3 positions, as defined before; (2) a complex formed from (a) at least one quinonoid compound and (b) at least one imidazole compound; and (3) any combination of (1) and (2); contain from 50 to 99.9, preferably from 90 to 99.9, more preferably from 95 to 99.9 percent by weight of component (A) based upon the combined amount of components (A) and (B) and from 0.1 to 50, preferably from 0.1 to 10, more preferably from 0.1 to 5 percent by weight of component (B) based upon the combined amount of components (A) and (B).

The polymerization inhibitor concentrate compositions of the present invention which comprise (A) at least one thermosettable ethylenically unsaturated resin; and (B) a member selected from the group consisting of (1) at least one 1,4-naphthoquinone substituted on the 2 or 3 or both the 2 and 3 positions, as defined before; (2) a complex formed from (a) at least one quinonoid compound and (b) at least one imidazole compound; and (3) any combination of (1) and (2); contain from 50 to 99.9, preferably from 90 to 99.9, more preferably from 95 to 99.9 percent by weight of component (A) based upon the combined amount of components (A) and (B) and from 0.1 to 50, preferably from 0.1 to 10, more preferably from 0.1 to 5 percent by weight of component (B) based upon the combined amount of components (A) and (B).

In storage stable thermosettable ethylenically unsaturated resin composition comprising (A) at least one thermosettable ethylenically unsaturated resin; and (B)) a member selected from the group consisting of (1) at least one 1,4-naphthoquinone substituted on the 2 or 3 or both the 2 and 3 positions, as defined before; (2) a complex formed from (a) at least one quinonoid compound and (b) at least one imidazole compound; and (3) any combination of (1) and (2); component (B) is present in an amount sufficient to render the composition storage stable, usually from 5 to 20,000, preferably from 50 to 10,000, more preferably from 100 to 5,000 parts per million by weight (ppm) of component (B) based upon the combined amount of components (A) and (B).

The 1,4-naphthoquinone compounds (B1) substituted in the 2 or 3 or both the 2 and the 3 positions without being complexed or reacted with an electron donor compound can provide the ethylenically unsaturated resin with enhanced storage stability with a suitable reactivity for some applications. The compounds (B1) are 2,3-dichloro-1,4-naphthoquinone, 2,3-dibromo-1,4-naphthoquinone, 2,3-dicyano-1,4-naphthoquinone, 2-chloro-1,4-naphthoquinone, 2-bromo-1,4-naphthoquinone, 2-nitro-1,4-naphthoquinone, 2,3,6,7,8,9-hexachloro-1,4-naphthoquinone, 3-bromo-2-chloro-1,4-naphthoquinone, any combination thereof.

If desired, the 1,4-naphthoquinone (B1) substituted on the 2 or 3 or both the 2 and 3 positions stabilizers of the present invention can be employed in combination with the known stabilizers such as, for example, 1,4-hydroquinone, 4-tertiary-butylcatechol, 4-methoxyphenol, methylhydroquinone, 4-chloro-2-nitrophenol, 2,4-dinitro-para-cresol,2,4-dinitrophenol, phenothiazine, oxalic acid, maleic acid, or any combination thereof. When employed, these known stabilizers are employed in an amount of from about 5 to about 5,000, preferably from about 25 to about 1,000, more preferably from about 50 to about 400 parts per million based upon the combined weight of thermosettable resin, polymerizable ethylenically unsaturated monomers and stabilizers.

If desired, the 1,4-naphthoquinone (B1) substituted on the 2 or 3 or both the 2 and 3 positions stabilizers of the present invention can be employed in combination with known electron donors which form electron-donor-acceptor complexes such as, for example, 1-methylimidazole, 2-methylimidazole, 2-ethyl-4-methylimidazole, 2-heptadecylimidazole, 2-isopropylimidazole, 2-(2-ethyl-4-methylimidazyl)-1-cyanoethane, 2-undecylimidazole, or any combination thereof.

The complex between the quinonoid compound (B2a) and the imidazole compound (B2b) can be prepared by admixing the two components in solution in a solvent such as methylene chloride, dimethylsulfoxide, methanol, ethanol, acetone or any combination thereof at a temperature of from about -20°C to about 60°C, preferably from about -5°C to about 30°C for a time sufficient to form the complex, usually form about 0.1 to about 48, preferably from about 0.5 to about 24, more preferably from about 1 to about 12 hours. The product may be isolated by precipitation from solution.

If desired, the complex can be formed by adding the two components separately to either the thermosettable ethylenically unsaturated resin or polymerizable ethylenically unsaturated monomer or a mixture thereof and forming the complex in situ. preparing the complex in this manner will usually require a much longer period of time due to the dilution effect of the resin and or monomer.

Also, the complex can be preformed before adding to either the monomer or ethylenically unsaturated polymer or any combination thereof.

The quinonoid compound, component (B2a), and the imidazole compound, component (B2b), are employed in a molar ratio of imidazole compound to quinonoid compound of from about 0.5:1 to about 100:1, preferably from about 0.5:1 to about 20:1, more preferably from about 1:1 to about 10:1.

Suitable quinonoid (electron acceptor) compounds (B2a) which can be employed herein include any mononuclear or polynuclear ring compounds containing two ketone oxygen atoms in the molecule. Likewise, the term "quinonoid" as employed herein means a compound which is a mononuclear or polynuclear ring compound which contains two ketone oxygen atoms attached to different carbon atoms in the ring in mononuclear ring compounds or different carbon atoms in the same ring or a different ring in polynuclear compounds. The term "mononuclear means a compound containing a single ring structure whereas the term "polynuclear" means a compound containing more than one ring structures. It is preferred that the "polynuclear" compounds be composed of fused rings.

Suitable substituent groups which are attached in the 2 or 3 or both the 2 and 3 positions of the quinonoid compounds include, for example, halogens, particularly chlorine or bromine, nitro groups or cyano groups.

Suitable such compounds include those represented by the following formulas I, II, III, IV and V 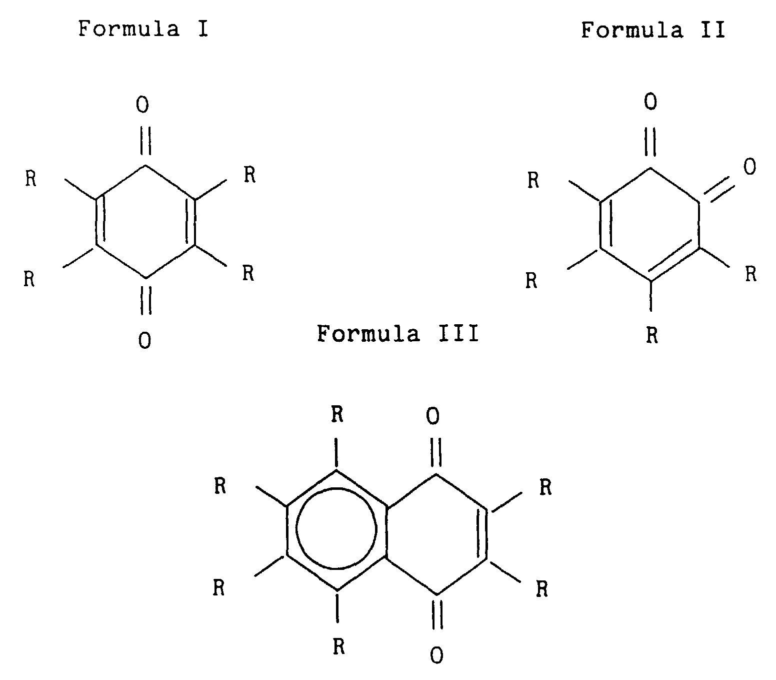 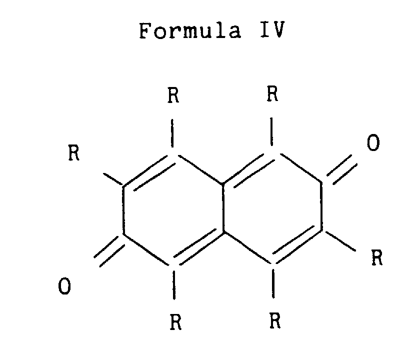 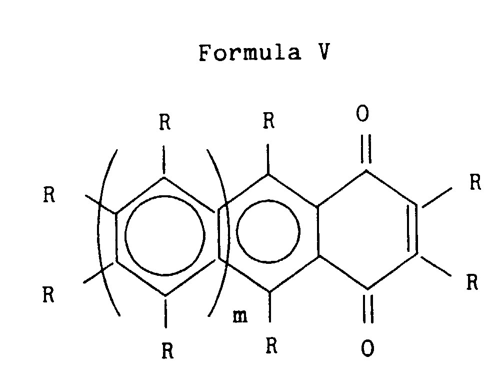 wherein each R is independently hydrogen, a halogen atom such as F, Cl, Br or I, a nitro group, a cyano group, an acyclic or a cyclic aliphatic hydrocarbon having from about 1 to about 20, preferably from 1 to about 10, more preferably from 1 to about 4 carbon atoms, or OR' wherein each R' is independently an acyclic or a cyclic aliphatic hydrocarbon having from about 1 to about 20, preferably from 1 to about 10, more preferably from 1 to about 3 carbon atoms; and m has a value from 1 to about 10, preferably from about 1 to about 5, more preferably from about 1 to about 3. Particularly suitable such quinonoid electron acceptor compounds include, for example, 1,4-benzoquinone, 1,4-naphthoquinone, 2,3,5,6-tetrachloro-1,4-benzoquinone, 2,3-dichloro-1,4-naphthoquinone, 2-chloro-1,4-naphthoquinone, 2,3-dibromo-1,4-naphthoquinone, 3-chloro-2-bromo-1,4-naphthoquinone, 6-chloro-1,4-naphthoquinone, 2-bromo-2-chloro-1,4-naphthoquinone, 5,8-dichloro-1,4-naphthoquinone, 2,3,5,4,6,7,8-hexachloro-1,4-naphthoquinone, 5-bromo-1,4-naphthoquinone, any combination thereof.

Suitable (electron donor) imidazole compounds (B2b) which can be employed herein include, for example, those represented by the following formulas VI, VII or VIII 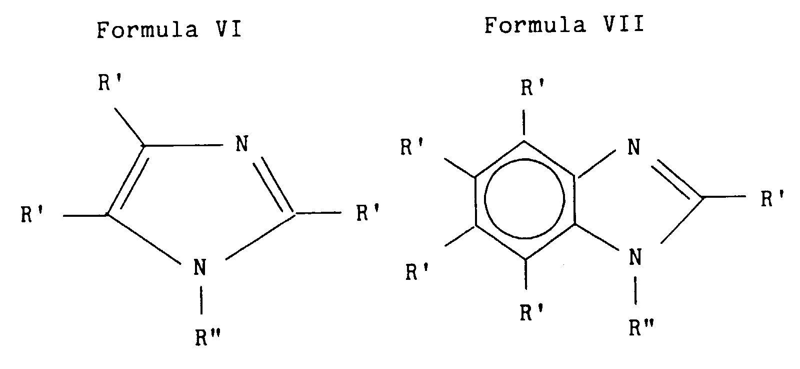 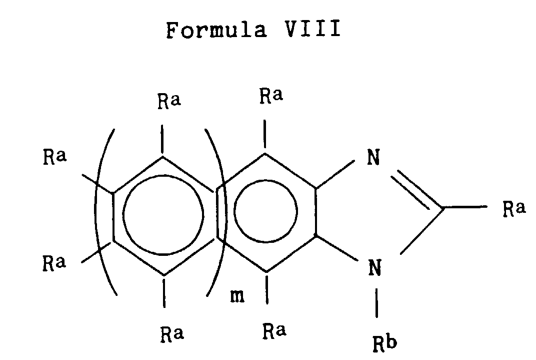 wherein each R^{a} is independently hydrogen, a cyanoalkyl group having from 1 to about 6 carbon atoms, a hydroxyalkyl group having from 1 to about 6 carbon atoms, an acyclic or a cyclic aliphatic hydrocarbon having from about 1 to about 20, preferably from 1 to about 10, more preferably from 1 to about 6 carbon atoms, or OR' wherein each R' is independently an acyclic or a cyclic aliphatic hydrocarbon having from about 1 to about 20, preferably from 1 to about 10, more preferably from 1 to about 6 carbon atoms; and m has a value from 1 to about 10, preferably from about 1 to about 6, more preferably from about 1 to about 3; R^{b} and R" are independently hydrogen, an acyclic or a cyclic aliphatic hydrocarbon having from about 1 to about 20, preferably from 1 to about 10, more preferably from 1 to about 3 carbon atoms, or a cyano alkyl group having from about 2 to about 6 carbon atoms.

Particularly suitable imidazole electron donor compounds which can be employed herein include, for example, 1-methylimidazole, 2-methylimidazole, 2-ethyl-4-methylimidazole, 2-heptadecylimidazole, 2-(2-ethyl-4-methylimidazoyl)-1-cyanoethane, 1-benzyl-2-methylimidazole, 2-isopropylimidazole, 2-undecylimidazole, 2-heptadecylimidazole, or any combination thereof.

If desired, the stabilizer complexes of the present invention can be employed in combination with the known stabilizers such as, for example, 1,4-hydroquinone, 4-tertiary-butylcatechol, 4-methoxyhenol, methylhydroquinone, 4-chloro-2-nitrophenol, 2,4-dinitropara-cresol,2,4-dinitrophenol, phenothiazine, oxalic acid, maleic acid, or any combination thereof. When employed, these known stabilizers are employed in an amount of from about 5 to about 5,000, preferably from about 25 to about 1,000, more preferably from about 50 to about 400 parts per million based upon the combined weight of thermosettable resin, polymerizable ethylenically unsaturated monomers and stabilizers.

The stabilizer complexes of the present invention can also be employed in combination with acids such as oxalic acid which, if desired, can be hydrated, or nitric acid.

Particularly suitable thermosettable resins which contain ethylenically unsaturated groups which can be employed herein include, for example, vinyl ester resins, unsaturated polyester resins, vinyl urethane resins, or any combination thereof.

Particularly suitable vinyl ester resins include, for example, those prepared by reacting a polyepoxide with an unsaturated monocarboxylic acid. Particularly suitable such vinyl ester resins and methods for their preparation are disclosed in US-A-3,367,992; 3,066,122; 3,179,623; 3,301,753; 3,256,226; 3,564,074; 3,892,819; 4,407,991 and 4,594,398. These include, but are not limited to those prepared by reacting a diglycidyl ether or polyglycidyl ether of a dihydric phenol or polyhydric phenol with an ethylenically unsaturated acid. These include, the reaction of diglycidyl ethers of bisphenol A, bisphenol F, bisphenol S, bisphenol K or polyglycidyl ethers of phenol aldehyde or substituted phenol aldehyde resins such as phenol-formaldehyde or cresol-formaldehyde novolac resins with acrylic acid, methacrylic acid, cinnamic acid, maleic acid, maleic anhydride, fumaric acid, cyanoacrylic acid, crotonic acid, α-phenylacrylic acid, methoxy acrylic acid, itaconic acid, halogenated acrylic acid or methacrylic acids, or any combination thereof.

Also suitable are the vinyl ester resins which contain dicyclopentadiene or other dienes and oligomers thereof as described in US-A-4,525,544 and 4,594,398. Particularly suitable dicyclopentadiene containing vinyl ester resins include, for example, those prepared by reacting an acid such as acrylic acid, methacrylic acid, cinnamic acid, maleic acid, maleic anhydride, fumaric acid, cyanoacrylic acid, crotonic acid, α-phenylacrylic acid, methoxy acrylic acid, itaconic acid, halogenated acrylic acid or methacrylic acids, or any combination thereof with phenol-cyclopentadiene resins, cresol-cyclopentadiene resins, phenol-dicyclopentadiene resins, cresol-pentadiene resins and resins prepared from phenol or cresol and higher oligomers of cyclopentadiene.

The vinyl ester resins can be prepared by reacting the glycidyl ether compound with the acid in amounts which provide a ratio of acid groups per epoxide group of from _0.7:1 to 1.2:1, preferably from 0.9:1 to 1:1, more preferably from 0.96:1 to 1:1. The reaction is usually conducted at temperatures of from 50°C to 150°C, preferably form 80°C to 130°C, more preferably from 110°C to 120°C. The reaction is usually conducted for a time sufficient to reduce the acid (-COOH group) content to a value below 6%, preferably below 2%, more preferably below 1% by weight based on the total reaction mass. The reaction can be conducted, and is preferably conducted in the presence of a catalyst. Suitable such catalysts include, for example, chromium trichloride, tris(dimethylamino)phenol, ethyltriphenylphosphonium acetate acetic acid complex, or combinations thereof. The catalyst, when employed, is usually employed in amounts of from about 0.01 to about 2, preferably from about 0.1 to about 0.3 percent by weight based on the total mass of reactants.

The vinyl ester resins can be modified with any suitable rubber or elastomer. Suitable rubbers or elastomers include, for example, carboxyl-containing rubbers or elastomers, copolymers of alkyl acrylates or methacrylates or alkyl esters of other alpha-alkyl rubber particles characterized by having a rubbery core and a grafted polymer shell which is compatible with vinyl ester resins. Vinyl ester resins can be modified with a carboxyl-containing rubber or elastomer by the method disclosed in US-A-3,892,819. These rubbers or elastomers containing acrylate groups, vinyl groups, secondary amine groups, or carboxyl-containing moieties are commercially available from the B. F. Goodrich Company under the tradename of HYCAR.

Other particularly suitable forms of rubber or elastomer for modification of the vinyl ester compositions of the present invention include poly(alkylacrylate) or poly(alkylmethacrylate polymers as produced by the methods disclosed in US-A-4,690,988, monomers polymerized in situ in the epoxy resin to form a stable polymer phase as disclosed in US-A-4,708,996 and 4,524,181, and rubbers or elastomers available in the form of grafted rubber concentrates as described in US-A-4,778,851.

Particularly suitable unsaturated polyester resins include, for example, those prepared by reacting an unsaturated polycarboxylic acid with a polyfunctional alcohol (polyol). Particularly suitable such polyester resins and methods for their preparation include those disclosed in US-A-2,627,510, 2,632,751, 2,945,837, 3,775,513 and 3,901,953. These include polyester resins prepared by reacting a suitable ethylenically unsaturated dicarboxylic acid such as maleic acid, fumaric acid, itaconic acid, citraconic acid, mesaconic acid, aconitric acid, or their anhydrides or combinations thereof with suitable polycarboxylic acids such as malonic acid, succinic acid, glutaric acid, adipic acid, pivalaic acid, suberic acid, azelaic acid, sebacic acid, isophthalic acid, terephthalic acid, phthalic acids, chlorendic acid, endomethylenetetrahydrophthalic acid, anhydrides of these acids or combinations thereof with an aliphatic diols or polyols having from 2 to 8 carbon atoms, aliphatic diolethers, such as ethylene glycol, diethylene glycol, propylene glycol, dipropylene glycol, glycerol, neopentyl glycol, mannitol, pentaerythritol, trimethylolpropane, hexanediol, trimethylolethane, polyethylene glycol, polypropylene glycol, sucrose, polymers prepared by reacting glycerol with ethylene oxide, propylene oxide, butylene oxide or combinations of such oxides.

The polyester resins are usually prepared at temperatures of from 100°C to 260°C, preferably from 150°C to 230°C. The reaction is conducted for a time sufficient to complete the reaction usually from 1 to 24, preferably from 2 to 18, more preferably from 2 to 12 hours, or when the acid number is less than 55, preferably less than 40,

Also suitable are polyester resins which contain dicyclopentadiene or other dienes and oligomers thereof as described in US-A-4,148,765, 4,409,371, 4,496,688 and 4,753,982. These polyester resins are prepared by reacting esterified hydrocarbons such as dicyclopentadiene, C₁₀ hydrocarbon concentrates, oligomers of dicyclopentadiene, norbornene, or mixtures thereof with an ethylenically unsaturated polycarboxylic acid such as maleic acid, fumaric acid, itaconic acid, or mixtures thereof prepared at a temperature from 100°C to 150°C to make the monoester. This product is further reacted with a suitable polyol, as mentioned above, and optionally a polyamine such as ethylene diamine, propylene diamine, hexane-1,6-diamine, piperazine, 2,2'-bis(4-aminocyclohexyl)propane, bis(aminoethyl)norbornane, toluene diamine and the polyamines such as aminoethylpiperazine and diethylenetriamine by maintaining or increasing the temperature to remove water and unreacted hydrocarbons by distillation and drive the reaction until the desired acid number is achieved which is from 5 to 60, preferably 15 to 40 and more preferably from 20 to 35.

The resins made from the dicyclopentadiene or oligomers thereof can also be blended with vinyl ester resin compositions as mentioned above.

Particularly suitable unsaturated vinyl urethane resins which can be employed herein include, for example, those prepared by reacting a hydroxyl terminated polyester resin with a multifunctional isocyanate and a hydroxyalkylacrylate. Particularly suitable such unsaturated vinyl urethane resins and methods for their preparation include, for example, those described in US-A-3,876,726, 4,287,116 and 4,524,178.

The unsaturated polyester resins and the vinyl urethane resins can also be modified with rubbers or elastomers as described for the vinyl ester resins.

If desired, these thermosettable unsaturated resins can be diluted or blended with a polymerizable ethylenically unsaturated monomer. Suitable such monomers include, for example, vinyl aromatic compounds; saturated or unsaturated aliphatic or cycloaliphatic esters of ethylenically unsaturated monocarboxylic acids wherein the ester portion of the monomer contains from 1 to about 20, preferably from about 1 to about 10, more preferably from about 1 to about 5 carbon atoms and the acid portion of the monomer contains from about 3 to about 10, preferably from about 3 to about 8, more preferably from about 3 to about 4 carbon atoms; any combination thereof. Particularly suitable such polymerizable ethylenically unsaturated monomers include, for example, those disclosed in the aforementioned US-A-3,892,819 and 4,594,398, particularly suitable are aromatic compounds such as styrene, α-methylstyrene, dichlorostyrene, vinyl naphthalene, vinyl toluene, divinylbenzene, vinyl acetate, vinyl benzoate, vinyl chloroacetate,; unsaturated esters such as esters of acrylic and methacrylic acid, vinyl acetate, vinyl benzoate, vinyl chloroacetate, vinyl laurate; unsaturated acids such as, for example, acrylic acid, alpha-alkylacrylic acid, butenoic acid, allylbenzoic acid, vinylbenzoic acid,; unsaturated organic halides such as vinyl chloride, vinylidene chloride,; nitriles such as acrylonitrile, methacrylonitrile,, diolefins such as butadiene, isoprene, methylpentadiene,; esters of polycarboxylic acids such as, for example, diallyl phthalate, divinyl succinate, diallyl maleate, divinyl adipate, dichloroallyl tetrahydrophthalate; and any combination of any two or more of such monomers.

These polymerizable ethylenically unsaturated monomers can be employed in any desired amount so as to reduce the viscosity of the composition; however, they are usually employed in amounts of from about zero to about 60, preferably from about 10 to about 55, more preferably from about 20 to about 50 percent by weight based upon the combined weight of thermosettable unsaturated resin and polymerizable ethylenically unsaturated monomer.

These stabilized thermosettable unsaturated resins can be cured with conventional curing agents or curing catalysts which generate free radicals such as, for example, organic peroxides, azo compounds, or any combination thereof. Particularly suitable such curing agents or curing catalysts include, for example, the peroxides such as, for example, benzoyl peroxide, tertiary-butyl hydroperoxide, ditertiary-butyl peroxide, hydrogen peroxide, potassium persulfate, methyl cyclohexyl peroxide, methyl ethyl ketone peroxide, cumene hydroperoxide, acetyl benzoyl peroxide, tetralin hydroperoxide, phenylcyclohexane hydroperoxide, tertiary-butyl perbenzoate, ditertiary-amyl perphthalate, ditertiary-butyl peradipate, tertiary-amyl percarbonate, or bis(4-tertiary-butylcyclohexyl)peroxydicarbonate, tert-butyl peroxy isopropyl carbonate, 1,1-di-tert-butylperoxy-3,3,5-trimethyl cyclohexane, 1,1-di-tert-butylperoxy cyclohexane, tert-butylperoxy-3,5,5-trimethyl hexanoate,; and azo compounds such as, for example, 2,2'-azobisisobutyronitrile, dimethyl-2,2'-azobisisobutyrate, 2,2'-azobis(2,4-dimethylvaleronitrile, or 2,2'-azobisisotoluylamide. Combinations of any two or more of the above curing catalysts or curing agents can be employed if desired.

These curing agents are employed in any amount which is sufficient to effect the cure of the stabilized thermosettable unsaturated resins; however, usually amounts of from about 0.1 to about 5, preferably from about 0.1 to about 3, percent by weight based upon total resin weight is sufficient to effect the cure. It should be noted, however, that the optimum amount of curing agent will vary depending upon the curing agent and the stabilized thermosettable unsaturated resin being employed.

If desired, accelerators or promoters for these curing agents or curing catalysts can be employed. Suitable such accelerators or promoters include metal salts of carboxylic acids such as, for example, cobalt naphthenate, or vanadium neodecanoate either alone or in combination with tertiary amines such as, for example, N,N-dimethylaniline, N,N-diethylaniline, N,N-dimethylacetoacetamide, N,N-dimethyl-para-toluidine, or any combination thereof.

The accelerators are suitably employed in amounts of from about 0.02 to about 1, more suitably from about 0.05 to about 0.6 percent by weight based on total resin weight.

If desired, the compositions of the present invention can contain reinforcing materials in the form of mats, woven fabric, unidirectional fibers, rovings, random fibers or filaments, inorganic fillers, inorganic whiskers, hollow spheres, ceramic and glass spheres or any combination thereof. These reinforcing materials can be prepared from glass fibers, aramid fibers, graphite fibers, and polymer fibers such as, for example, nylon, polyalkyleneterephthalate, polyethylene, polypropylene, polyesters, or combinations thereof.

If desired, other components can be included in the compositions of the present invention, such as, for example, pigments, dyes, fillers, wetting agents, chemical thickeners, fire retardant additives, emission suppressants for monomer vapors, adhesion promoters, and combinations thereof. These components are included in amounts which are effective for their purpose, e.g. pigments and dyes are employed in amounts sufficient to color the composition to the extent desired, wetting agents are employed in amounts sufficient to wet out any reinforcing materials present in the composition.

The curable compositions of the present invention can be employed in the preparation of laminates or composites which are useful in the construction of storage vessels, automobiles, airplanes, and other structures and structural parts that can be produced via filament winding, pultrusion, braiding, compression molding, and resin transfer molding. Further uses include, for example, tank and vessel liners, coatings, polymer concrete, potting or encapsulating formulations.

The following examples are illustrative of the present invention, but are not to be construed as to limiting the scope thereof in any manner.
The following thermosettable resins were employed in the examples.

Thermosettable Resin A is a vinyl ester resin having an acid number not greater than 10, a viscosity at 25°C of 2200-2700 centistokes, an SPI gel time at 180°F of 7.0-12.0 minutes, a Gardner color not greater than 4, and a density of 1.068-1.078 g/ml. This resin is commercially available from The Dow Chemical Company as DERAKANE™411-35LI vinyl ester resin, lot no. AJ890216901.

Thermosettable Resin B is a vinyl ester resin prepared in the following manner.
A reactor was charged with 2,816.4 g of diglycidyl ether of bisphenol A having an EEW of 181 and 1,488.1 g of tetrabromobisphenol A. The resin was heated at 150°C for 1.5 hours with 2.39 g of a 70% methanolic solution of ethyltriphenylphosphonium acetate·acetic acid complex with a nitrogen sparge. The resultant advanced epoxy resin was reacted with 886 g of glacial methacrylic acid in the presence of air and 400 ppm of hydroquinone at 110°C in the presence of 6.6 grams of 2,4,6-tri(N,N-dimethylamino)phenol as a catalyst until a 1.1% acid concentration was reached. The resultant vinyl ester resin was dissolved in styrene such that the resultant mixture has a styrene content of 30% by weight.

Thermosettable Resin C is Thermosettable Resin B with additional amounts of styrene such that the total amount of styrene is 35% by weight based on total weight of the resin.

Thermosettable Resin D is a vinyl ester resin having an acid number not greater than 10, a viscosity at 25°C of 2200-2700 centistokes, an SPI gel time at 180°F of 7.0-12.0 minutes, a Gardner color not greater than 4, and a density of 1.068-1.078 g/ml. This resin is commercially available from The Dow Chemical Company as DERAKANE™411-35LI vinyl ester resin, lot no. AJ890613902.

The following quinonoid electron acceptor compounds were employed in the examples.

Quinonoid Compound A is 1,4-benzoquinone.

Quinonoid Compound B is 1,4-naphthoquinone.

Quinonoid Compound C is 2,3,5,6-tetrachloro-1,4-benzoquinone.

Quinonoid Compound D is 2,3-dichloro-1,4-naphthoquinone.

Quinonoid Compound E is 2,3-dimethoxy-5-methylbenzoquinone.

Quinonoid Compound F is plumbagin (5-hydroxy-2-methyl-1,4-naphthoquinone).

Quinonoid Compound G is 3,4,5,6-tetrachloro-1,2-benzoquinone.

The following imidazole electron donor compounds were employed in the examples.

Imidazole Compound A is 1-methylimidazole.

Imidazole Compound B is 2-ethyl-4-methylimidazole.

Imidazole Compound C is benzimidazole.

Imidazole Compound D is 2-phenylimidazole.

Imidazole Compound E is 2-(2-ethyl-4-methylimidazyl)-1-cyanoethane.

Imidazole Compound F is 1-benzyl-2-methylimidazole.

Other Inhibitors and Additives (OIA) employed in the examples are as follows.

Preformed Complex BA was prepared by dissolving 15.84 g (0.1002 mole) of 1,4-naphthoquinone (quinonoid compound B) in 300 ml of methylene chloride. The flask containing the solution was fitted with a reflux condenser, placed in an ice/water bath, and cooled to 3° C with stirring by a magnetic stirring bar. 1-Methylimidazole (imidazole compound A), 8.66 g (0.1055 mole), was then added to the quinone solution in two portions (3.81 g and 4.85 g) over a 15 minute period. After each addition the temperature increases by about 10°C and was allowed to cool back down to 2 to 4°C. The solution was maintained at a temperature of 4 to 6°C for another 4.5 hours and was allowed to set overnight at ambient temperature. The methylene chloride and excess 1-methylimidazole was evaporated off first on a hot plate and then in a vacuum oven at 60°C for about 20 minutes. A black tarry precipitate was recovered which was soluble in acetone, methanol, slightly soluble in hot water and dilute acetic acid, and insoluble in toluene. The proton magnetic resonance spectrum of the product in deuterated dimethylsulfoxide indicates that the aromatic ring protons of the 1,4-naphthoquinone at 7.85 ppm (splitting constants 5.5, 3.5 Hz) has shifted to about 8.3 ppm and broadened to 60 Hz overall. The imidazole peaks were present at 7.4, 7.0, 6.8, and 3.6 ppm.

### EXAMPLES 1 - 27 and COMPARATIVE EXPERIMENTS A - R

Various thermosettable resins were inhibited with various inhibitor compositions. These inhibited compositions were prepared by blending the indicated resin with the indicated inhibitor composition at a temperature of 25°C. In the case of the inhibitor complexes of the present invention, the complex was formed prior to blending it with the thermosettable resin. The inhibitor complex was formed by blending the electron donor and electron acceptor compounds together at a temperature of 25°C for about 24 to 120 hours.

The blended compositions are given in Table I.

The blended compositions are subjected to the following tests.

### Storage Stability

These compositions were tested for storage stability by placing the composition in a two ounce (59.1 ml) narrow mouth round amber bottle filled to the indicated volume and capping the thus filled bottle with 20 mm tin lined plastic caps. The bottles were placed in an air circulated oven maintained at the indicated temperature. The stability of the resin was checked daily by inverting the bottles. A sample was considered to be gelled and the test terminated when a layer of solid resin remains at the bottom of the bottle or when the sample appears stringy in consistency. The time in days required for the sample to gel was recorded.

### Reactivity (Gel Time & Cure Time)

A 0.4 gram sample of benzoyl peroxide curing agent was mixed with 0.2 gram of styrene in a 100 ml tripour beaker. A 40 gram sample of the resin composition was introduced and mixed thoroughly with a wooden spatula. The thus catalyzed resin was poured into each of two 18 mm x 150 mm test tubes to a level of 3 inches (76 mm). The test tubes were allowed to stand for 10 to 20 minutes to be rid of air bubbles. A thermocouple was inserted into the center of the resin composition to one inch (25.4 mm) below the resin surface. The test tube was placed in a constant temperature bath maintained at 150°F (82.2°C). The temperature change as a function of time was recorded on a microprocessor. The initial time was marked when the resin was heated to 150°F (65.6°C). The time required to reach 190°F (87.7°C) was recorded as the gel time. The test was continued until the recorder has run two minutes past the maximum temperature. The maximum temperature was the peak exotherm. the time required to reach the peak exotherm was recorded as the cure time.

The results are given in Table I.

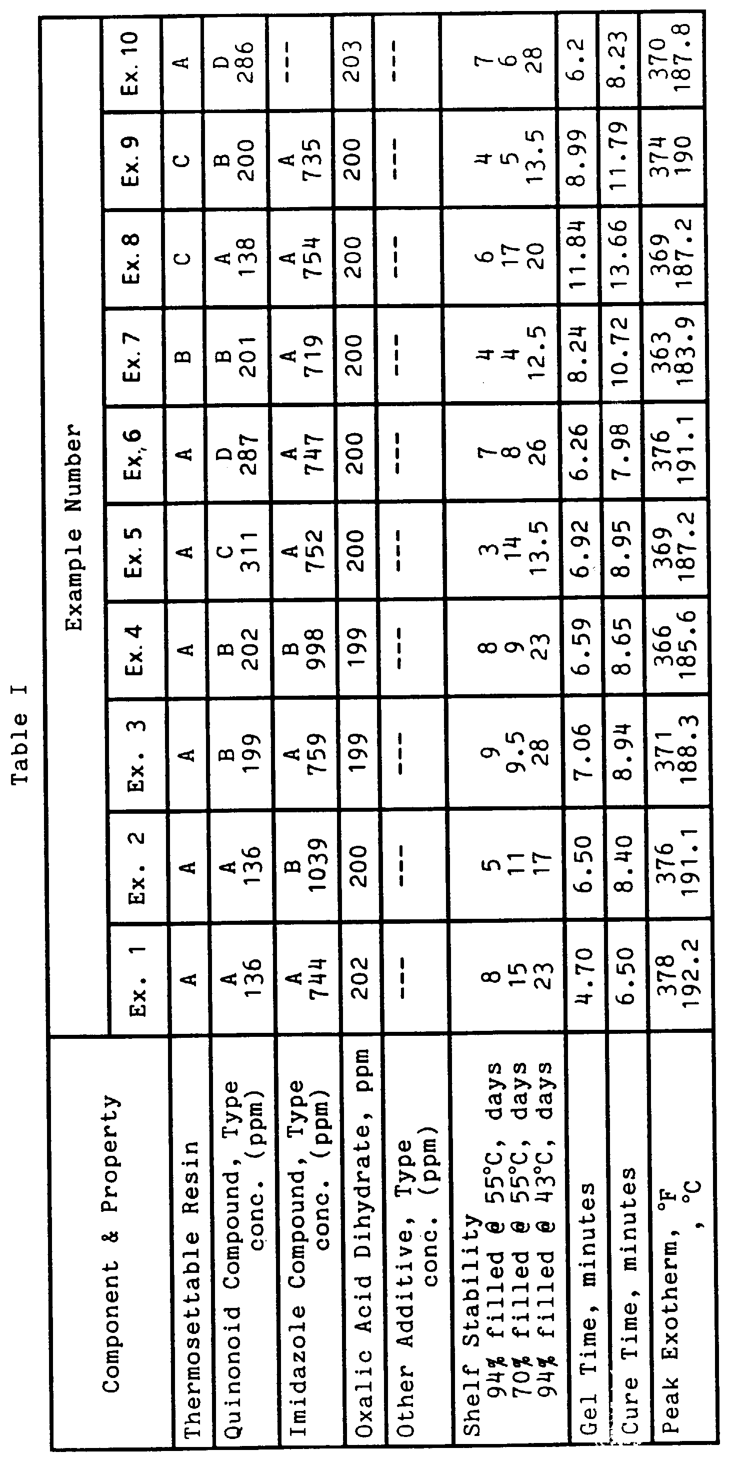

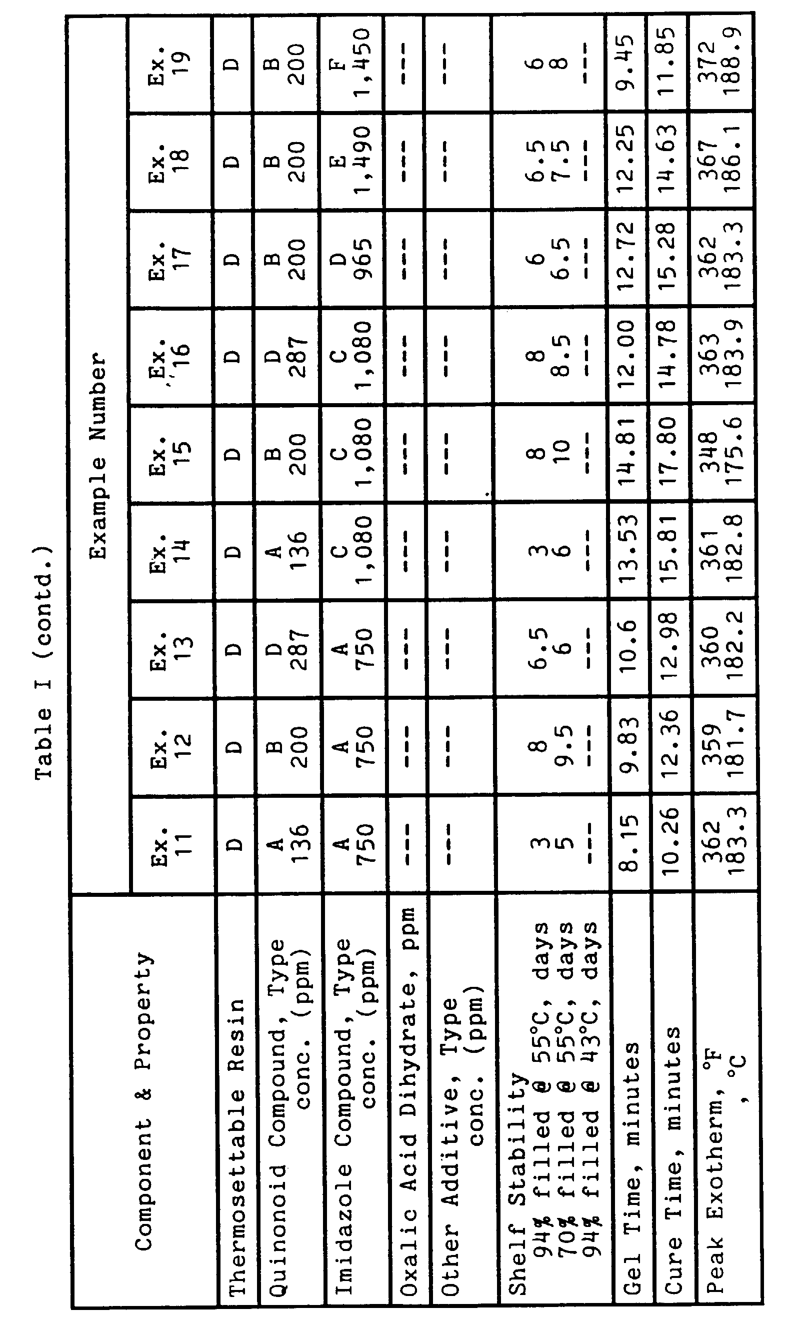

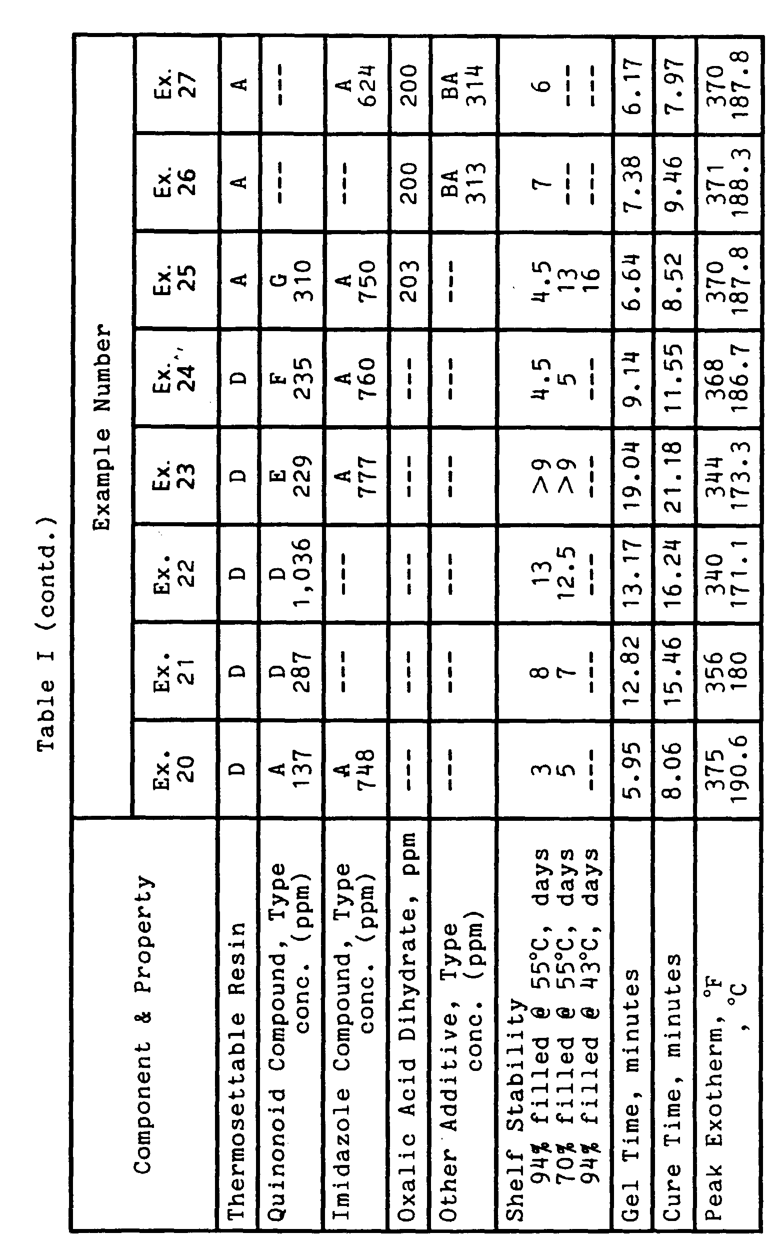

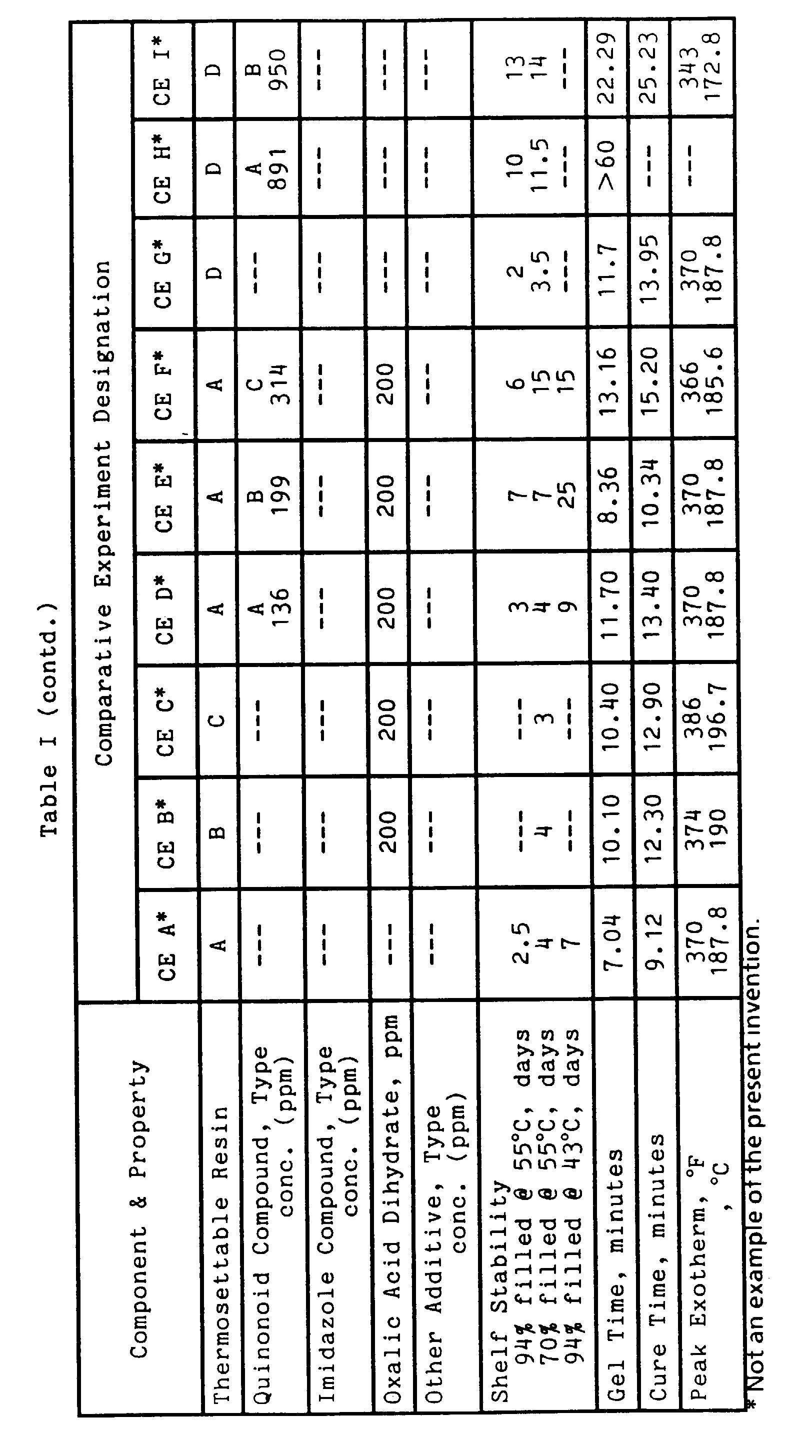

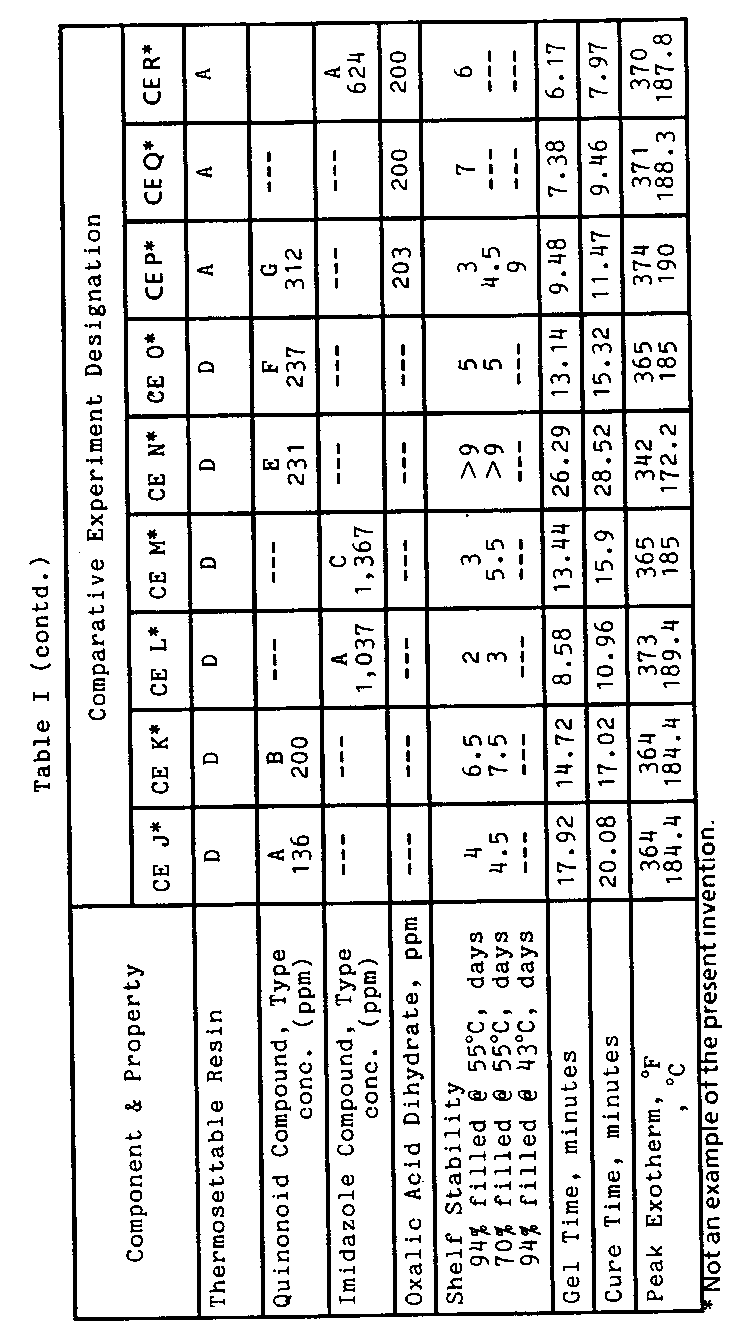

The above data clearly illustrates that the stabilizer system of the present invention provides shelf stability for the unsaturated thermosettable resins without an unacceptable decrease in reactivity when the stabilized unsaturated thermosettable resins were blended with a curing agent and cured.

### EXAMPLES 28 - 36

The following stabilizer compounds are employed in these examples.

Stabilizer Compound A is 2,3-dichloro-1,4-naphthoquinone.

Other Inhibitors and Additives (OIA) employed in the examples are as follows.

OIA-A is 1-methylimidazole.

Various thermosettable resins are inhibited with various inhibitor compositions. These inhibited compositions are prepared by blending the indicated resin with the indicated inhibitor composition at a temperature of 25°C. In the case of the inhibitor complexes with the imidazole, the complex is formed prior to blending it with the thermosettable resin. The inhibitor complex is formed by blending the electron donor and electron acceptor compounds together at a temperature of 25°C for about 24 hours.

The blended compositions are given in Table II.

The blended compositions are subjected to the following tests.

### Storage Stability

These compositions are tested for storage stability by placing the composition in a two ounce (59.1 ml) narrow mouth round amber bottle filled to the indicated volume and capping the thus filled bottle with 20 mm tin lined plastic caps. The bottles are placed in an air circulated oven maintained at the indicated temperature. The stability of the resin is checked daily by inverting the bottles. A sample is considered to be gelled and the test terminated when a layer of solid resin remains at the bottom of the bottle or when the sample appears stringy in consistency. The time in days required for the sample to gel is recorded.

### Reactivity (Gel Time & Cure Time

A 0.4 gram sample of benzoyl peroxide curing agent is mixed with 0.2 gram of styrene in a 100 ml tripour beaker. A 40 gram sample of the resin composition is introduced and mixed thoroughly with a wooden spatula. The thus catalyzed resin is poured into each of 18 mm X 150 mm two test tubes to a level of 3 inches (76 mm). The test tubes are allowed to stand for 10 to 20 minutes to be rid of air bubbles. A thermocouple is inserted into the center of the resin composition to one inch (25.4 mm) below the resin surface. The test tube is placed in a constant temperature bath maintained at 150°F (82.2°C). The temperature change as a function of time is recorded on a microprocessor. The initial time is marked when the resin is heated to 150°F (65.6°C). The time required to reach 190°F (87.7°C) is recorded as the gel time. The test is continued until the recorder has run two minutes past the maximum temperature. The maximum temperature is the peak exotherm. the time required to reach the peak exotherm is recorded as the cure time.

The results are given in Table II.

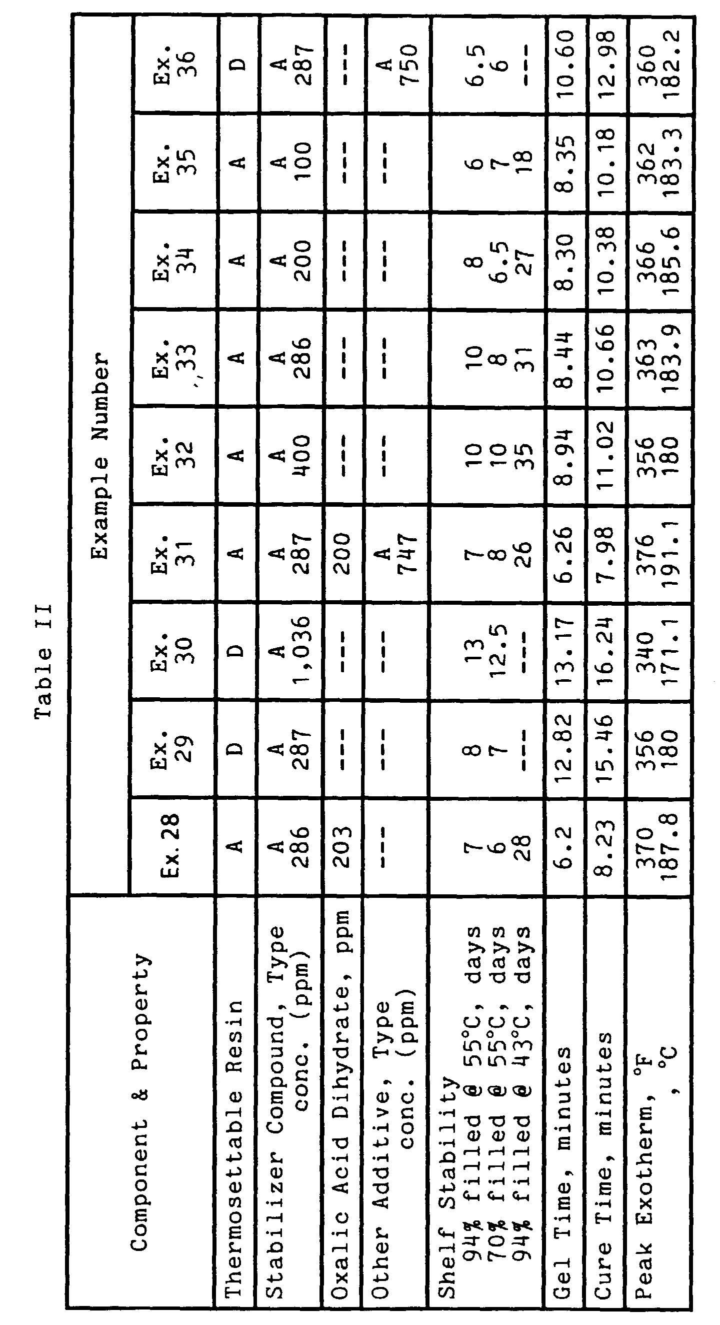

The above data clearly illustrates that the substituted 1,4-naphthoquinone stabilizer system of the present invention provides shelf stability for the unsaturated thermosettable resins without an unacceptable decrease in reactivity when the stabilized unsaturated thermosettable resins are blended with a curing agent and cured.

## Claims

1. A polymerization inhibitor concentrate composition containing:
(A) at least one polymerizable ethylenically unsaturated monomer; and
(B) a member selected from the group consisting of
(1) at least one 1,4-naphthoquinone substituted on the 2 or 3 or both the 2 and 3 positions selected from 2,3-dichloro-1,4-naphthoquinone, 2,3-dibromo-1,4-naphthoquinone, 2,3-dicyano-1,4-naphthoquinone, 2-chloro-1,4-naphthoquinone, 2-bromo-1,4-naphthoquinone, 2-nitro-1,4-naphthoquinone, 2,3,6,7,8,9-hexachloro-1,4-naphthoquinone, 3-bromo-2-chloro-1,4-naphthoquinone or any combination of any two or more such compounds;
(2) a complex formed from
(a) at least one quinoid compound and
(b) at least one imidazole compound; and
(3) any combination of (1) and (2);
wherein
(i) component (A) is present in an amount of from 50 to 99.9 percent by weight, based upon the combined weight of components (A) and (B);
component (B) is present in an amount of from 0.1 to 50 percent by weight, based upon the combined weight of components (A) and (B); and
(ii) components (B2a) and (B2b) are employed in a molar ratio of imidazole compound (B2b) to quinoid compound (B2a) of from 0.5:1 to 100:1.

2. A polymerization inhibitor concentrate composition containing:
(A) at least one thermosettable ethylenically unsaturated polymer; and
(B) a member selected from the group consisting of
(1) at least one one 1,4-naphthoquinone substituted on the 2 or 3 or both the 2 and 3 positions selected from 2,3-dichloro-1,4-naphthoquinone, 2,3-dibromo-1,4-naphthoquinone, 2,3-dicyano-1,4-naphthoquinone, 2-chloro-1,4-naphthoquinone, 2-bromo-1,4-naphthoquinone, 2-nitro-1,4-naphthoquinone, 2,3,6,7,8,9-hexachloro-1,4-naphthoquinone, 3-bromo-2-chloro-1,4-naphthoquinone or any combination of any two or more such compounds;
(2) a complex formed from
(a) at least one quinoid compound and
(b) at least one imidazole compound; and
(3) any combination of (1) and (2);
wherein
(i) component (A) is present in an amount of from 50 to 99.9 percent by weight, based upon the combined weight of components (A) and (B);
component (B) is present in an amount of from 0.1 to 50 percent by weight, based upon the combined weight of components (A) and (B); and
(ii) components (B2a) and (B2b) are employed in a molar ratio of imidazole compound (B2b) to quinoid compound (B2a) of from 0.5:1 to 100:1.

3. A curable composition containing
(I) a resin composition comprising
(A) at least one thermosettable ethylenically unsaturated resin; and
(B) a member selected from the group consisting of
(1) at least one one 1,4-naphthoquinone substituted on the 2 or 3 or both the 2 and 3 positions selected from 2,3-dichloro-1,4-naphthoquinone, 2,3-dibromo-1,4-naphthoquinone, 2,3-dicyano-1,4-naphthoquinone, 2-chloro-1,4-naphthoquinone, 2-bromo-1,4-naphthoquinone, 2-nitro-1,4-naphthoquinone, 2,3,6,7,8,9-hexachloro-1,4-naphthoquinone, 3-bromo-2-chloro-1,4-naphthoquinone or any combination of any two or more of such compounds;
(2) a complex formed from
(a) at least one quinoid compound and
(b) at least one imidazole compound; and
(3) any combination of (1) and (2);
wherein
(i) component (A) is present in an amount of from 50 to 99.9 percent by weight, based upon the combined weight of components (A) and (B); component (B) is present in an amount of from 0.1 to 50 percent by weight, based upon the combined weight of components (A) and (B); and
(ii) components (B2a) and (B2b) are employed in a molar ratio of imidazole compound (B2b) to quinoid compound (B2a) of from 0.5:1 to 100:1; and
(II) a curing amount of at least one curing agent for component (I).

4. The composition of any of claims 1 to 3 wherein component (B) is the complex (B2) or the combination (B3) of substituted 1,4-naphthoquinone (B1) and complex (B2).

5. The composition of any of claims 2 to 4 which additionally contains at least one polymerizable ethylenically unsaturated monomer.

6. The composition of any of claims 1 to 5 wherein the polymerizable ethylenically unsaturated monomer is a vinyl aromatic compound or a combination of any two or more vinyl aromatic compounds.

7. The composition of claim 6 wherein the vinyl aromatic compound is styrene, vinyl toluene, alpha-methyl styrene, divinylbenzene, vinylnaphthaline, dichlorostyrene, or any combination of any two or more of such vinyl aromatic compounds.

8. The composition of any of claims 3 to 7 wherein the thermosettable ethylenically unsaturated resin is a vinyl ester resin, an unsaturated polyester resin, a vinyl urethane resin, or any combination thereof.

9. The composition of any of claims 3 to 8 wherein the curing agent is a peroxygen containing compound.

10. The composition of any of claims 1 to 9 wherein component (B) is the complex (B2) or a combination (B3) of substituted 1,4-naphthoquinone (B1) and complex (B2), the complex (B2) being formed from
(a) at least one quinoid compound represented by any one of the following formulas I to V 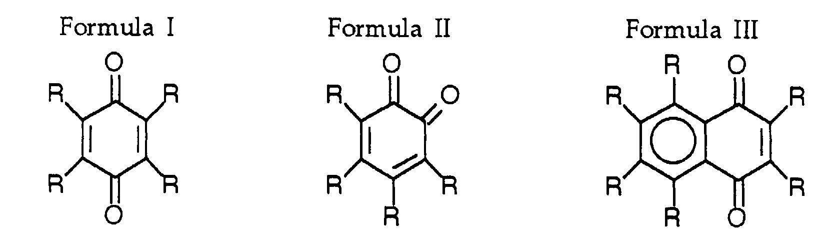 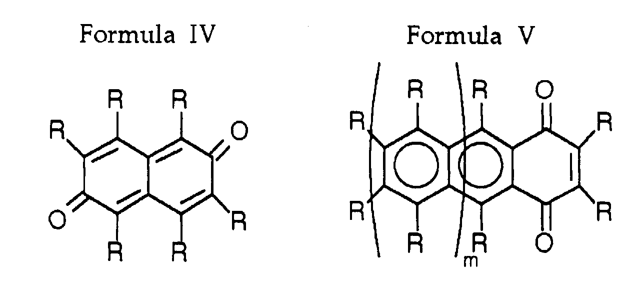 wherein each R is independently hydrogen, a halogen atom, a nitro group, a cyano group, an acyclic or cyclic hydrocarbon group having from 1 to 20 carbon atoms, or OR', wherein each R' is independently an acyclic or cyclic aliphatic hydrocarbon group having from 1 to 20 carbon atoms; and m has a value from 1 to 10; and
(b) at least one imidazole compound represented by any one of the following formulas VI to VIII 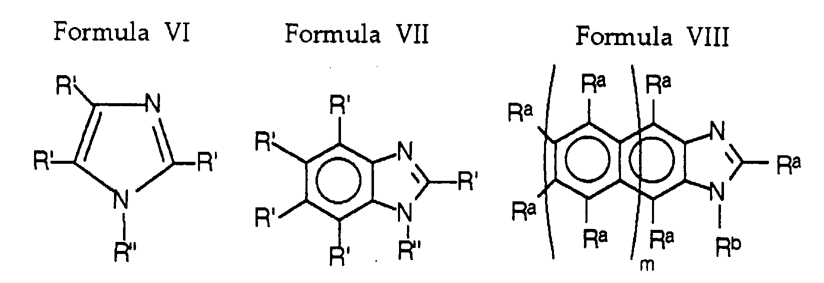 wherein each R^{a} is independently hydrogen, a cyanoalkyl group having from 1 to 6 carbon atoms, a hydroxyalkyl group having from 1 to 6 carbon atoms, an acyclic or cyclic hydrocarbon group having from 1 to 20 carbon atoms, or OR', wherein each R' is independently an acyclic or cyclic hydrocarbon group having from 1 to 20 carbon atoms; and m has a value from 1 to 6; R^{b} and R" are independently hydrogen, an acyclic or cyclic hydrocarbon group having from 1 to 20 carbon atoms, or a cyanoalkyl group having from 2 to 6 carbon atoms.

11. The composition of claim 10 wherein the quinoid compound (B2a) is 1,4-benzoquinone, 1,4-naphthoquinone, 2,3,5,6-tetrachloro-1,4-benzoquinone, 2,3-dichloro-1,4-naphthoquinone or a combination of any two or more thereof.

12. The composition of claims 10 wherein the imidazole compound is 1-methylimidazole, 2-methylimidazole, 2-ethyl-4-methylimidazole or any combination thereof.

13. A method of manufacturing an article which method comprises curing a curable composition of any of claims 3 to 12.

## Patentansprüche

1. Polymerisationsinhibitorkonzentrat, enthaltend
(A) mindestens ein polymerisierbares ethylenisch ungesättigtes Monomer; und
(B) einen Stoff, der ausgewählt ist aus der Gruppe, bestehend aus
(1) mindestens einem 1,4-Naphthochinon, das in der 2-oder 3- oder sowohl in der 2- als auch in der 3-Stellung substituiert ist und ausgewählt ist aus der Gruppe, die aus 2,3-Dichlor-1,4-naphthochinon, 2,3-Dibrom-1,4-naphthochinon, 2,3-Dicyan-1,4-naphthochinon, 2-Chlor-1,4-naphthochinon, 2-Brom-1,4-naphthochinon, 2-Nitro-1,4-naphthochinon, 2,3,6,7,8,9-Hexachlor-1,4-naphthochinon, 3-Brom-2-chlor-1,4-naphthochinon oder einer beliebigen Kombination aus beliebigen zwei oder mehreren der genannten Verbindungen besteht;
(2) einem Komplex, der gebildet ist aus
(a) mindestens einer chinoiden Verbindung und
(b) mindestens einer Imidazolverbindung; und
(3) einer beliebigen Kombination aus (1) und (2);
wobei
(i) die Komponente (A) in einer Menge von 50 bis 99,9 Gewichtsprozent, bezogen auf das Gesamtgewicht der Komponenten (A) und (B), vorhanden ist; die Komponente (B) in einer Menge von 0,1 bis 50 Gewichtsprozent, bezogen auf das Gesamtgewicht der Komponenten (A) und (B), vorhanden ist; und
(ii) die Komponenten (B2a) und (B2b) in einem Molverhältnis von Imidazolverbindung (B2b) zu chinoider Verbindung (B2a) von 0,5:1 bis 100:1 angewandt werden.

2. Polymerisationsinhibitorkonzentrat, enthaltend
(A) mindestens ein thermisch härtbares ethylenisch ungesättigtes Polymer; und
(B) einen Stoff, der ausgewählt ist aus der Gruppe, bestehend aus
(1) mindestens einem 1,4-Naphthochinon, das in der 2-oder 3- oder sowohl in der 2- als auch in der 3-Stellung substituiert ist und ausgewählt ist aus der Gruppe, die aus 2,3-Dichlor-1,4-naphthochinon, 2,3-Dibrom-1,4-naphthochinon, 2,3-Dicyan-1,4-naphthochinon, 2-Chlor-1,4-naphthochinon, 2-Brom-1,4-naphthochinon, 2-Nitro-1,4-naphthochinon, 2,3,6,7,8,9-Hexachlor-1,4-naphthochinon, 3-Brom-2-chlor-1,4-naphthochinon oder einer beliebigen Kombination aus beliebigen zwei oder mehreren der genannten Verbindungen besteht;
(2) einem Komplex, der gebildet ist aus
(a) mindestens einer chinoiden Verbindung und
(b) mindestens einer Imidazolverbindung; und
(3) einer beliebigen Kombination aus (1) und (2) ;
wobei
(i) die Komponente (A) in einer Menge von 50 bis 99,9 Gewichtsprozent, bezogen auf das Gesamtgewicht der Komponenten (A) und (B), vorhanden ist; die Komponente (B) in einer Menge von 0,1 bis 50 Gewichtsprozent, bezogen auf das Gesamtgewicht der Komponenten (A) und (B), vorhanden ist; und
(ii) die Komponenten (B2a) und (B2b) in einem Molverhältnis von Imidazolverbindung (B2b) zu chinoider Verbindung (B2a) von 0,5:1 bis 100:1 angewandt werden.

3. Härtbare Stoffmischung, enthaltend
(I) eine Harzmischung, welche enthält
(A) mindestens ein thermisch härtbares ethylenisch ungesättigtes Harz; und
(B) einen Stoff, der ausgewählt ist aus der Gruppe, bestehend aus
(1) mindestens einem 1,4-Naphthochinon, das in der 2-oder 3- oder sowohl in der 2- als auch in der 3-Stellung substituiert ist und ausgewählt ist aus der Gruppe, die aus 2,3-Dichlor-1,4-naphthochinon, 2,3-Dibrom-1,4-naphthochinon, 2,3-Dicyan-1,4-naphthochinon, 2-Chlor-1,4-naphthochinon, 2-Brom-1,4-naphthochinon, 2-Nitro-1,4-naphthochinon, 2,3,6,7,8,9-Hexachlor-1,4-naphthochinon, 3-Brom-2-chlor-1,4-naphthochinon oder einer beliebigen Kombination aus beliebigen zwei oder mehreren der genannten Verbindungen besteht;
(2) einem Komplex, der gebildet ist aus
(a) mindestens einer chinoiden Verbindung und
(b) mindestens einer Imidazolverbindung; und
(3) einer beliebigen Kombination aus (1) und (2);
wobei
(i) die Komponente (A) in einer Menge von 50 bis 99,9 Gewichtsprozent, bezogen auf das Gesamtgewicht der Komponenten (A) und (B), vorhanden ist; die Komponente (B) in einer Menge von 0,1 bis 50 Gewichtsprozent, bezogen auf das Gesamtgewicht der Komponenten (A) und (B), vorhanden ist; und
(ii) die Komponenten (B2a) und (B2b) in einem Molverhältnis von Imidazolverbindung (B2b) zu chinoider Verbindung (B2a) von 0,5:1 bis 100:1 angewandt werden; und
(II) eine härtende Menge mindestens eines Härtungsmittels für die Komponente (I).

4. Stoffmischung nach einem der Ansprüche 1 bis 3, wobei die Komponente (B) der Komplex (B2) oder die Kombination (B3) aus substituiertem 1,4-Naphthochinon (B1) und Komplex (B2) ist.

5. Stoffmischung nach einem der Ansprüche 2 bis 4, die zusätzlich mindestens ein polymerisierbares ethylenisch ungesättigtes Monomer enthält.

6. Stoffmischung nach einem der Ansprüche 1 bis 5, wobei das polymerisierbare ethylenisch ungesättigte Monomer eine vinylaromatische Verbindung oder eine Kombination aus beliebigen zwei oder mehreren vinylaromatischen Verbindungen ist.

7. Stoffmischung nach Anspruch 6, wobei die vinylaromatische Verbindung Styrol, Vinyltoluol, alpha-Methylstyrol, Divinylbenzol, Vinylnaphthalin, Dichlorstyrol oder eine beliebige Kombination aus beliebigen zwei oder mehreren dieser vinylaromatischen Verbindungen ist.

8. Stoffmischung nach einem der Ansprüche 3 bis 7, wobei das thermisch härtbare ethylenisch ungesättigte Harz ein Vinylesterharz, ein ungesättigtes Polyesterharz, ein Vinylurethanharz oder eine Kombination dieser Harze ist.

9. Stoffmischung nach einem der Ansprüche 3 bis 8, wobei das Härtungsmittel eine Peroxyverbindung ist.

10. Stoffmischung nach einem der Ansprüche 1 bis 9, wobei die Komponente (B) der Komplex (B2) oder eine Kombination (B3) aus substituiertem 1,4-Naphthochinon (Bl) und Komplex (B2) ist und der Komplex (B2) gebildet ist aus
(a) mindestens einer chinoiden Verbindung, die durch eine beliebige der folgenden Formeln I bis V 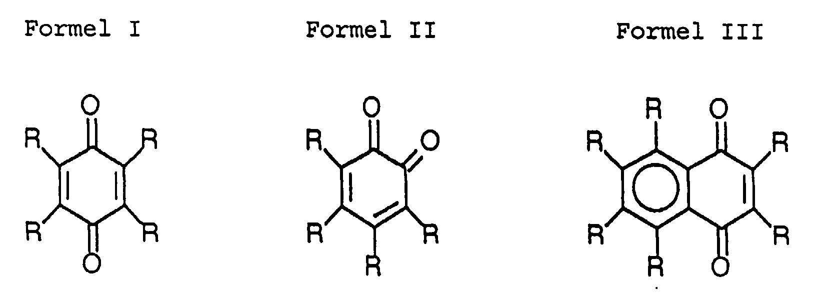 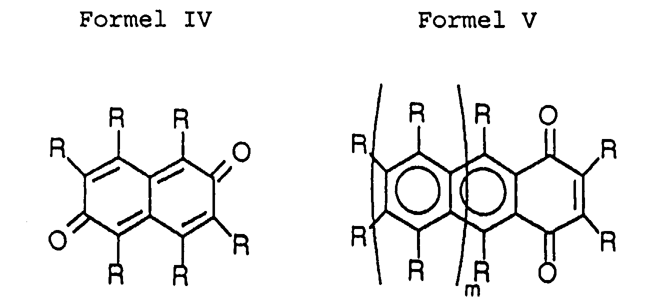 wiedergegeben wird, wobei R jeweils unabhängig Wasserstoff, ein Halogenatom, eine Nitrogruppe, eine Cyangruppe, einen acyclischen oder cyclischen Kohlenwasserstoffrest mit 1 bis 20 Kohlenstoffatomen oder den Rest OR' bedeutet, in dem R' jeweils unabhängig einen acyclischen oder cycloaliphatischen Kohlenwasserstoffrest mit 1 bis 20 Kohlenstoffatomen bezeichnet; und m einen Wert von 1 bis 10 hat; und
(b) mindestens einer Imidazolverbindung, die durch eine beliebige der folgenden Formeln VI bis VIII 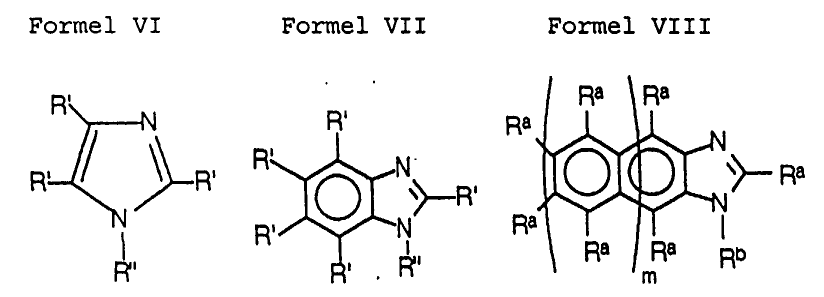 wiedergegeben wird, wobei R^{a} jeweils unabhängig Wasserstoff, einen Cyanalkylrest mit 1 bis 6 Kohlenstoffatomen, einen Hydroxyalkylrest mit 1 bis 6 Kohlenstoffatomen, einen acyclischen oder cyclischen Kohlenwasserstoffrest mit 1 bis 20 Kohlenstoffatomen oder den Rest OR' bedeutet, in dem R' jeweils unabhängig einen acyclischen oder cyclischen Kohlenwasserstoffrest mit 1 bis 20 Kohlenstoffatomen bezeichnet; und m einen Wert von 1 bis 6 hat; R^{b} und R" unabhängig Wasserstoff, einen acyclischen oder cyclischen Kohlenwasserstoffrest mit 1 bis 20 Kohlenstoffatomen oder einen Cyanalkylrest mit 2 bis 6 Kohlenstoffatomen bedeuten.

11. Stoffmischung nach Anspruch 10, wobei die chinoide Verbindung (B2a) 1,4-Benzochinon, 1,4-Naphthochinon, 2,3,5,6-Tetrachlor-1,4-benzochinon, 2,3-Dichlor-1,4-naphthochinon oder eine Kombination aus beliebigen zwei oder mehreren dieser Chinone ist.

12. Stoffmischung nach Anspruch 10, wobei die Imidazolverbindung 1-Methylimidazol, 2-Methyimidazol, 2-Ethyl-4-methylimidazol oder eine beliebige Kombination dieser Imidazole ist.

13. Verfahren zur Herstellung eines Gegenstandes, bei dem man eine härtbare Stoffmischung nach einem der Ansprüche 3 bis 12 härtet.

## Revendications

1. Composition concentrée d'inhibiteur de polymérisation contenant :
(A) au moins un monomère polymérisable à insaturation éthylénique ; et
(B) un élément choisi dans l'ensemble constitué par :
(1) au moins une 1,4-naphtoquinone substituée en position 2 ou 3 ou sur les deux positions 2 et 3, choisie parmi la 2,3-dichloro-1,4-naphtoquinone, la 2,3-dibromo-1,4-naphtoquinone, la 2,3-dicyano-1,4-naphtoquinone, la 2-chloro-1,4-naphtoquinone, la 2-bromo-1,4-naphtoquinone, la 2-nitro-1,4-naphtoquinone, la 2,3,6,7,8,9-hexachloro-1,4-naphtoquinone, la 3-bromo-2-chloro-1,4-naphtoquinone ou toute combinaison de deux quelconques ou plus de deux quelconques de ces composés ;
(2) un composé complexe formé à partir de :
(a) au moins un composé quinoïde et
(b) au moins un composé imidazole ; et
(3) une quelconque combinaison de (1) et (2) ;
dans laquelle
(i) le composant (A) est présent en une quantité comprise entre 50 et 99,9 % en poids, par rapport aux poids combinés des composants (A) et (B) ; le composant (B) est présent en une quantité comprise entre 0,1 et 50 % en poids, par rapport aux poids combinés des composants (A) et (B) ; et
(ii) les composants (B2a) et (B2b) sont utilisés en un rapport molaire du composé imidazole (B2b) au composé quinoïde (B2a) compris entre 0,5:1 et 100:1.

2. Composition concentrée d'inhibiteur de polymérisation contenant :
(A) au moins un polymère thermodurcissable à insaturations éthyléniques ; et
(B) un élément choisi dans l'ensemble constitué par :
(1) au moins une 1,4-naphtoquinone substituée en position 2 ou 3 ou sur les deux positions 2 et 3, choisie parmi la 2,3-dichloro-1,4-naphtoquinone, la 2,3-dibromo-1,4-naphtoquinone, la 2,3-dicyano-1,4-naphtoquinone, la 2-chloro-1,4-naphtoquinone, la 2-bromo-1,4-naphtoquinone, la 2-nitro-1,4-naphtoquinone, la 2,3,6,7,8,9-hexachloro-1,4-naphtoquinone, la 3-bromo-2-chloro-1,4-naphtoquinone ou toute combinaison de deux quelconques ou plus de deux quelconques de ces composés ;
(2) un composé complexe formé à partir de :
(a) au moins un composé quinoïde et
(b) au moins un composé imidazole ; et
(3) une quelconque combinaison de (1) et (2) ;
dans laquelle
(i) le composant (A) est présent en une quantité comprise entre 50 et 99,9 % en poids, par rapport aux poids combinés des composants (A) et (B) ; le composant (B) est présent en une quantité comprise entre 0,1 et 50 % en poids, par rapport aux poids combinés des composants (A) et (B) ; et
(ii) les composants (B2a) et (B2b) sont utilisés en un rapport molaire du composé imidazole (B2b) au composé quinoïde (B2a) compris entre 0,5:1 et 100:1.

3. Composition durcissable contenant :
(I) une composition de résine comprenant :
(A) au moins une résine thermodurcissable à insaturations éthyléniques ; et
(B) un élément choisi dans l'ensemble constitué par
(1) au moins une 1,4-naphtoquinone substituée en position 2 ou 3 ou sur les deux positions 2 et 3, choisie parmi la 2,3-dichloro-1,4-naphtoquinone, la 2,3-dibromo-1,4-naphtoquinone, la 2,3-dicyano-1,4-naphtoquinone, la 2-chloro-1,4-naphtoquinone, la 2-bromo-1,4-naphtoquinone, la 2-nitro-1,4-naphtoquinone, la 2,3,6,7,8,9-hexachloro-1,4-naphtoquinone, la 3-bromo-2-chloro-1,4-naphtoquinone ou toute combinaison de deux quelconques ou plus de deux quelconques de ces composés ;
(2) un composé complexe formé à partir de :
(a) au moins un composé quinoïde et
(b) au moins un composé imidazole ; et
(3) une quelconque combinaison de (1) et (2) ;
dans laquelle
(i) le composant (A) est présent en une quantité comprise entre 50 et 99,9 % en poids, par rapport aux poids combinés des composants (A) et (B) ; le composant (B) est présent en une quantité comprise entre 0,1 et 50 % en poids, par rapport aux poids combinés des composants (A) et (B) ; et
(ii) les composants (B2a) et (B2b) sont utilisés en un rapport molaire du composé imidazole (B2b) au composé quinoïde (B2a) compris entre 0,5:1 et 100:1 ; et
(II) une quantité de durcissement d'au moins un agent de durcissement pour le composant (I).

4. Composition conforme à l'une quelconque des revendications 1 à 3, dans laquelle le composant (B) est le composé complexe (B2) ou la combinaison (B3) de la 1,4-naphtoquinone substituée (B1) et du composé complexe (B2).

5. Composition conforme à l'une quelconque des revendications 2 à 4, qui contient en plus au moins un monomère polymérisable à insaturation éthylénique.

6. Composition conforme à l'une quelconque des revendications 1 à 5, dans laquelle le monomère polymérisable à insaturation éthylénique est un composé vinyl-aromatique ou une combinaison de deux quelconques ou plus de deux quelconques composés vinyl-aromatiques.

7. Composition conforme à la revendication 6, dans laquelle le composé vinyl-aromatique est le styrène, le vinyltoluène, l'alpha-méthylstyrène, le divinylbenzène, la vinylnaphtaline, le dichlorostyrène ou toute combinaison de deux quelconques ou plus de deux quelconques de ces composés vinyl-aromatiques.

8. Composition conforme à l'une quelconque des revendications 3 à 7, dans laquelle la résine thermodurcissable à insaturations éthyléniques est une résine d'ester de vinyle, une résine polyester insaturée, une résine de vinyluréthanne ou une quelconque combinaison de ces dernières.

9. Composition conforme à l'une quelconque des revendications 3 à 8, dans laquelle l'agent de durcissement est un composant peroxygéné.

10. Composition conforme à l'une quelconque des revendications 1 à 9, dans laquelle le composant (B) est le composé complexe (B2) ou une combinaison (B3) de la 1,4-naphtoquinone substituée (B1) et d'un composé complexe (B2), le composé complexe (B2) étant formé à partir de :
(a) au moins un composé quinoïde représenté par une quelconque des formules suivantes I à V: 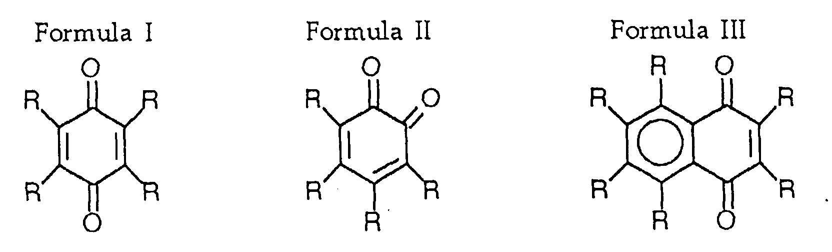 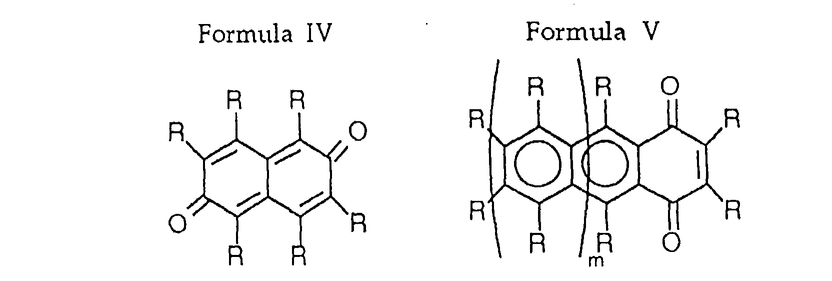 dans lesquelles chaque R représente indépendamment un atome d'hydrogène, un atome d'halogène, un groupe nitro, un groupe cyano, un groupe hydrocarboné cyclique ou acyclique comportant de 1 à 20 atomes de carbone, ou OR', sachant que chaque R' représente indépendamment un groupe hydrocarboné aliphatique cyclique ou acyclique comportant de 1 à 20 atomes de carbone ; et m a une valeur comprise entre 1 et 10 ; et
(b) au moins un composé imidazole représenté par une quelconque des formules suivantes VI à VIII : 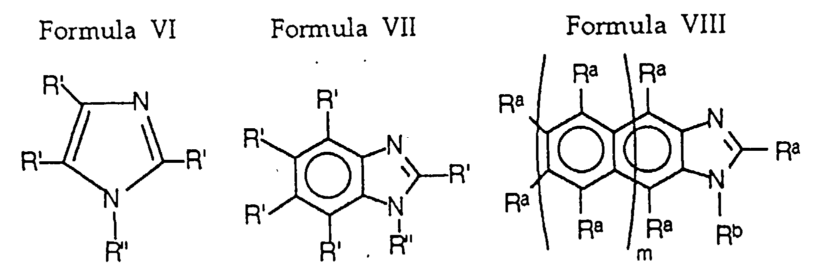 dans lesquelles chaque R^{a} représente indépendamment un atome d'hydrogène, un groupe cyanoalkyle comportant de 1 à 6 atomes de carbone, un groupe hydroxyalkyle comportant de 1 à 6 atomes de carbone, un groupe hydrocarboné cyclique ou acyclique comportant de 1 à 20 atomes de carbone, ou OR', sachant que chaque R' représente indépendamment un groupe hydrocarboné cyclique ou acyclique comportant de 1 à 20 atomes de carbone; et m a une valeur comprise entre 1 et 6 ; R^{b} et R" représentent indépendamment un atome d'hydrogène, un groupe hydrocarboné cyclique ou acyclique comportant de 1 à 20 atomes de carbone, ou un groupe cyanoalkyle comportant de 2 à 6 atomes de carbone.

11. Composition conforme à la revendication 10, dans laquelle le composé quinoïde (B2a) est la 1,4-benzoquinone, la 1,4-naphtoquinone, la 2,3,5,6-tétrachloro-1,4-benzoquinone, la 2,3-dichloro-1,4-naphtoquinone ou une combinaison de deux quelconques ou plus de deux quelconques de ces derniers.

12. Composition conforme à la revendication 10, dans laquelle le composé imidazole est le 1-méthylimidazole, le 2-méthylimidazole, le 2-éthyl-4-méthylimidazole ou une quelconque combinaison de ces derniers.

13. Procédé de fabrication d'un article, lequel procédé comprend le durcissement d'une composition durcissable conforme à l'une quelconque des revendications 3 à 12.
